(19) Europäisches Patentamt
European Patent Office
Office européen des brevets

(11) Veröffentlichungsnummer: **0 446 737 A2**

# (12) EUROPÄISCHE PATENTANMELDUNG

(21) Anmeldenummer: **91103170.6**

(22) Anmeldetag: **02.03.91**

(51) Int. Cl.5: **C08L 59/00**, //(C08L59/04, 77:00),(C08L59/04,77:00,63:02)

(30) Priorität: **12.03.90 DE 4007767**

(43) Veröffentlichungstag der Anmeldung: **18.09.91 Patentblatt 91/38**

(84) Benannte Vertragsstaaten: **BE DE FR GB IT NL**

(71) Anmelder: **BASF Aktiengesellschaft**
**Carl-Bosch-Strasse 38**
**W-6700 Ludwigshafen(DE)**

(72) Erfinder: **Bohnet, Siegbert, Dr.**
**Collinistrasse 5**
**W-6800 Mannheim 1(DE)**
Erfinder: **Goerrissen, Heiner, Dr.**
**Im Zinkig 112**
**W-6700 Ludwigshafen(DE)**
Erfinder: **Hilt, Albrecht, Dr.**
**Moselstrasse 5**
**W-6703 Limburgerhof(DE)**
Erfinder: **Saenger, Dietrich, Dr.**
**Lorcher Ring 16 a**
**W-6710 Frankenthal(DE)**

## (54) Polyoxymethylen-Formmassen mit verbesserter Wärmestabilität.

(57) Thermoplastische Formmassen, enthaltend als wesentliche Komponenten

A) 50 - 99,99 Gew.-% eines Polyoxymethylenhomo- oder Copolymerisats

B) 0,005 - 2 Gew.-%

i) Poly-ε-caprolactam mit einem Zahlenmittel des Molekulargewichts im Bereich von 10.000 - 15.000 oder

ii) einer Mischung aus einem Poly-ε-caprolactam und einem Polykondensationsprodukt aus 2,2-Di-(4-hydroxyphenyl)propan und Epichlorhydrin

sowie darüber hinaus

C) 0 - 40 Gew.-% eines schlagzäh modifizierenden Polymeren und

D) 0 - 40 Gew.-% faser- oder teilchenförmige Füllstoffe oder deren Mischungen.

EP 0 446 737 A2

Die vorliegende Erfindung betrifft thermoplastische Formmassen, enthaltend als wesentliche Komponenten

A) 50 - 99,99 Gew.-% eines Polyoxymethylenhomo- oder Copolymerisats

B) 0,005 - 2 Gew.-%

i) Poly-ε-caprolactam mit einem Zahlenmittel des Molekulargewichts im Bereich von 10.000 bis 15.000 oder

ii) einer Mischung aus einem Poly-ε-caprolactam und einem Polykondensationsprodukt aus 2,2-Di-(4-hydroxyphenyl)propan und Epichlorhydrin

sowie darüber hinaus

c) 0 - 40 Gew.-% eines schlagzäh modifizierenden Polymeren und

D) 0 - 40 Gew.-% faser- oder teilchenförmige Füllstoffe oder deren Mischungen.

Darüber hinaus betrifft die Erfindung die Verwendung derartiger Formmassen zur Herstellung von Formkörpern jeglicher Art und die so erhaltenen Formkörper.

Polyoxymethylen-Formmassen finden als thermoplastische Werkstoffe in vielen Anwendungen ihren Einsatz, insbesondere für Gehäuse und Maschinenbauteile sowie im Automobilsektor.

Bei allen diesen Anwendungen ist stets darauf zu achten, daß die Wärmestabilität des Polymeren ausreichend ist, denn nicht stabilisierte Polyoxymethylene zeigen bei thermischer Beanspruchung einen ausgeprägten Molekulargewichtsabau, der entlang der Polymerkette solange fortschreitet, bis eine C-C-Bindung in der Kette auftritt.

Dies hat dazu geführt, bei der Polymerisation von Trioxan oder Formaldehyd Comonomere mitzuverwenden, durch deren Einbau C-C-Bindungen in der Kette entstehen. Dies kann den thermischen Abbau der Polyoxymethylene zwar reduzieren, aber eine weitere Verbesserung wäre wünschenswert.

In einer Reihe von Veröffentlichungen wird die Verwendung von Polyamiden als Wärmestabilisatoren für Polyoxymethylene beschrieben, gegebenenfalls unter Zusatz weiterer Stoffe. Nur beispielsweise sie hier auf die US-A 3 406 223, die FR-A 1 570 281 und die US-A 3 480 694 verwiesen. In der jap. Offenlegungsschrift 51/17972 werden mit aromatischen Polyamiden stabilisierte Polyoxymethylene beschrieben, die eine geringe Verfärbung bei der Verarbeitung erleiden und eine geringe Neigung zum Schäumen aufweisen. In der EP-A 47 529 werden stabilisierte Polyoxymethylen-Formmassen beschrieben, die zur Stabilisierung ein in einem Trägerharz dispergiertes Polyamid enthalten.

Alle derart stabilisierten Produkte zeigen zwar gegenüber dem Polyoxymethylen ohne Zusätze eine verbesserte Wärmestabilität, können jedoch noch nicht in vollem Umfang zufriedenstellen.

Aufgabe der vorliegenden Erfindung war es daher, Polyoxymethylen-Formmassen mit verbesserte Wärmestabilität zur Verfügung zu stellen.

Diese Aufgabe wird erfindungsgemäß gelöst durch thermoplastische Formmassen, enthaltend als wesentliche Komponenten

A) 50 - 99,5 Gew.-% eines Polyoxymethylenhomo- oder Copolymerisats

B) 0,005 - 2 Gew.-%

i) Poly-ε-caprolactam mit einem Zahlenmittel des Molekulargewichts im Bereich von 10.000 bis 15.000 oder

ii) einer Mischung aus einem Poly-ε-caprolactam und einem Polykondensationsprodukt aus 2,2-Di-(4-hydroxyphenyl)propan und Epichlorhydrin

sowie darüber hinaus

c) 0 - 40 Gew.-% eines schlagzäh modifizierenden Polymeren und

D) 0 - 40 Gew.-% faser- oder teilchenförmige Füllstoffe oder deren Mischungen.

Bevorzugte Massen dieser Art sind den Unteransprüchen zu entnehmen.

Als Komponente A) enthalten die erfindungsgemäßen Formmassen 50 bis 99,5, vorzugsweise 60 bis 98 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol.% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 - 20 und insbesondere 0,3 - 10 mol.% an wiederkehrenden Einheiten

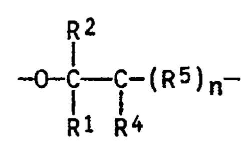

wobei $R^1$ bis $R^4$ unabhängig voneinander ein Wasserstofatom, eine $C_1$-$C_4$-Alkylgruppe oder eine halogensubstituierte Alkylgruppe mit 1-4 C-Atomen und $R^5$ eine $-CH_2-$, $-CH_2O-$, eine $C_1$-$C_4$-Alkyl- oder $C_1$-$C_4$-Haloalkyl substituierte Methylengruppe oder eine entsprechende Oxymethylengruppe darstellen und n einen Wert im Bereich von 0-3 hat. Vorteilhafterweise können diese Gruppen durch Ringöffnung von cyclischen Ethern in die Copolymere eingeführt werden. Bevorzugte cyclische Ether sind solche der Formel

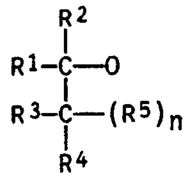

wobei $R^1$-$R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

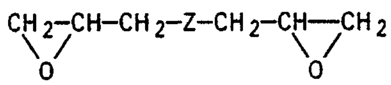

wobei Z eine chemische Bindung, -O-, -ORO- (R = $C_1$-$C_8$-Alkylen oder $C_2$-$C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2-8-C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymeren haben Schmelzpunkte von mindestens 150 °C und Molekulargewichte (Gewichtsmittelwert) Mw im Bereich von 5000 - 150000, vorzugsweise von 7000 - 100000.

Endgruppenstabilisierte Polyoxymethylenpolymerisate, die an den Kettenenden C-C-Bindungen aufweisen, werden besonders bevorzugt.

Als wesentliche Komponente B) enthalten die erfindungsgemäßen Formmassen 0,005 - 2, vorzugsweise 0,01 - 1 Gew.-% eines Poly-$\epsilon$-caprolactam mit einem Zahlenmittel des Molekulargewichts im Bereich von 10.000 bis 15.000 oder einer Mischung eines solchen Polyamids mit einem Polykondensationsprodukt aus Bisphenol A und Epichlorhydrin.

Das Molekulargewicht des Polyamids übt einen deutlichen Einfluß auf die Eigenschaften der Polyoxymethylen-Formmassen aus; so bewirkt beispielsweise die Verwendung eines Polyamids mit einem Zahlenmittel des Molekulargewichts von 17.000 zwar auch eine thermische Stabilisierung, doch läßt die Farbe von extrudierten Teilen aus solchen Mischungen zu wünschen übrig. Verwendet man dagegen ein Poly-$\epsilon$-caprolactam mit einem niedrigen Molekulargewicht, so ist dessen Einarbeitung in das Polyoxymethylen und der Stabilisierungseffekt nicht in vollem Umfang befriedigend.

Durch die Mitverwendung eines Polykondensationsprodukts aus Bisphenol A und Epichlorhydrin kann die Dispergierbarkeit der zur Stabilisierung verwendeten Polyamide deutlich verbessert werden; darüber hinaus kann durch Variation des Anteils an diesem Polykondensationsprodukt der Kristallinitätsgrad der Polyoxymethylene einfach gesteuert werden. Die eingesetzten Polyamide haben neben ihrer wärmestabilisierenden Wirkung einen sehr stark nukleierenden Einfluß, d.h. die Kristallisation der Polyoxymethylene wird erheblich beschleunigt. Das Kondensationsprodukt aus Bisphenol A und Epichlorhydrin kompensiert diesen Effekt je nach Mengenanteil teilweise oder vollständig, so daß dadurch der Kristallisationsgrad von Formkörpern, die aus den Formmassen hergestellt werden, gesteuert werden kann.

Durch den positiven Einfluß der Kondensationsprodukte aus Bisphenol A und Epichlorhydrin auf die Dispergierbarkeit der Polyamide im Polyoxymethylen, ist das Molekulargewicht des eingesetzten Poly-$\epsilon$-caprolactam bei der Verwendung von Mischungen nicht mehr so kritisch und kann auch oberhalb von 15.000 liegen; vorzugsweise werden in diesem Fall Produkte mit einem Zahlenmittel des Molekulargewichts von nicht mehr als 20.000 eingesetzt, besonders bevorzugt jedoch auch in den Mischungen Polyamide im Molekulargewichtsbereich 10.000 - 15.000.

Sowohl die Polyamide mit Molekulargewichten (Zahlenmittelwerten) von 10.000 - 15.000 als auch die Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Fa. Shell). Das Molekulargewicht der Polykondensate kann in weiten Grenzen variieren; prinzipiell sind die im Handel erhältlichen Typen sämtlich geeignet.

Das Mischungsverhältnis von Polyamid Polykondensat unterliegt an sich keiner besonderen

Einschränkung; um eine ausreichende thermische Stabilisierung zu erhalten, werden im allgemeinen Mischungen aus 30 bis 95, vorzugsweise 40 - 70 Gew.-%, Polyamid und 5 - 70, vorzugsweise 30 - 60 Gew.-% des Polykondensationsprodukts eingesetzt.

Die Komponente B) kann auch als Batch in einem Polyoxymethylenpolymerisat, vorzugsweise einem der Komponenten A) entsprechenden Produkt eingesetzt werden.

Neben den Komponenten A) und B) können die erfindungsgemäßen thermoplastischen Formmassen noch 0 bis 40, vorzugsweise 5 bis 30 und insbesondere 10 bis 30 Gew.-% eines schlagzäh modifizierenden Polymeren enthalten. Grundsätzlich eignen sich hierfür alle Arten von an sich bekannten Kautschuken, doch haben sich Pfropfkautschuke mit einer Pfropfgrundlage auf Butadien-Basis und eine Pfropfhülle aus vinylaromatischen Monomeren, (Meth)acrylnitril, (Meth)acrylsäure und (Meth)acrylsäureestern in einigen Fällen als besonders geeignet erwiesen. Entsprechende Produkte sind z.B. in der DE 19 64 156, der EP-A 156 285 und der DE-A 34 41 547 beschrieben; im Handel erhältlich sind geeignete Produkte unter den Bezeichnungen Paraloid® (Rohm & Haas). Wegen näherer Einzelheiten sei hier auf die erwähnten Druckschriften hingewiesen.

Als besonders geeigneter Pfropfkautschuk hat sich ein Produkt mit einer Pfropfgrundlage aus Polybutadien und geringen Anteilen (0,5 - 3 Gew.-%) t-Dodecylmercaptan erwiesen, auf welche eine Pfropfhülle aus einer Mischung aus Acrylsäureestern und ggf. Styrol und (Meth)acrylnitril aufgepfropft ist; insbesondere besteht die Pfropfhülle aus einer Mischung aus Methylmethacrylat und n-Butylacrylat im Gewichtsverhältnis 70:30 bis 95:5, insbesondere 85:15 bis 95:5.

Polyurethane zur Schlagzähmodifizierung sind z.B. in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® - (Bayer AG) oder Elastollan® (Elastogran Polyurethane Elastomere GmbH) erhältlich.

Als Komponente D) können die erfindungsgemäßen Formmassen 0 - 40, vorzugsweise 5 - 30 Gew.-% am faser- oder teilchenförmigen Füllstoff oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmen E-Glasen mit einem Durchmesser von 5 - 200 µm, vorzugsweise 8 - 50 µm eingesetzt werden können, wobei die faserförmigen Füllstoffe nach ihrer Einarbeitung vorzugsweise eine mittlere Länge von 0,05 - 1 mm, insbesondere 0,1 - 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A) und B) und ggf. C) und D) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Füllstoffe, Lichtstabilisatoren und Pigmente genannt. Der Anteil solcher Zusätze liegt im allgemeinen im Bereich von 0,001 - 5 Gew.-% (Stabilisatoren, Pigmente und Schmiermittel) bzw. 5 - 40 Gew.-% (Füllstoffe).

Entsprechende Verbindungen sind dem Fachmann bekannt und beispielsweise in der EP-A 327 384 beschrieben.

Die erfindungsgemäßen thermoplastischen Formmassen zeichnen sich durch ein ausgewogenes Eigenschaftsspektrum, insbesondere eine gute thermische Stabilität aus. Demzufolge eignen sie sich besonders zur Herstellung von Formkörpern jeglicher Art.

Beispiel

Es wurden folgende Komponenten eingesetzt:

- A Polyoxymethylen-Copolymerisat aus Trioxan und 2,5 - 3 Gew.-% Butandiolformal, bezogen auf den Gesamtmonomergehalt (Ultraform® N 2320 der Ultraform GmbH) mit einem Schmelzindex von 7,4 g/10 min (190 °C/2,16 kg)
- B/1 Poly-ε-caprolactam mit einem Zahlenmittel des Molekulargewichts von 14.000
- B/2 Mischung aus B/1 und einem Kondensationsprodukt aus Bisphenol A und Epichlorhydrin (Phenoxy® PKHH der UCC)
- B/3 Batch aus 50 Gew.-% Ultraform® N 2320 25 Gew.-% B/1 25 Gew.-% Phenoxy® PKHH
- B/V Poly-ε-caprolactam mit einem Zahlenmittel des Molekulargewichts von 17.000 (Ultramid® B3 der BASF AG)
- B/4 Mischung aus Ultramid® B3 (= B/V) und Phenoxy® PKHH im Gewichtsverhältnis 1:1.

Die Komponente B/1 wurde auf einem Extruder mit der Komponente A) abgemischt.

Die Komponenten B/2 und B/4 wurden durch Abmischen des Polyamids mit Phenoxy in der Schmelze und Extrusion der Mischungen hergestellt.

Das Granulat wurde anschließend gemahlen

und auf einem Extruder bei Temperaturen im Bereich von 190 bis 230°C in einer Schmelze der Komponente 4) eingearbeitet und extrudiert.

Zur Prüfung der Eigenschaften wurde die Löslichkeit der jeweiligen Komponente B) im Polyoxymethylen und der Gewichtsverlust nach 2 bzw. 8 Stunden Lagerung bei 222°C in $N_2$ oder Luft gemessen.

Die Zusammensetzung der jeweiligen Massen und die Ergebnisse der Messungen sind der nachstehenden Tabelle zu entnehmen.

Tabelle

| Beispiel | Komp. A) | Anteil (Gew.-%) Komponente B) | Löslichkeit von B) zu A) | Gewichtsverlust 2 h $N_2$ | Gewichtsverlust 2 h Luft | Gewichtsverlust 8 h $N_2$ | Gewichtsverlust 8 h Luft | Schmelzindex g/10 min 190°C, 216 kg |
|---|---|---|---|---|---|---|---|---|
| 1 | 99,8 | 0,2 B/1 | gut | 0,3 | 1,1 | 2,0 | 6,2 | 7,4 |
| 2 | 99,8 | 0,2 B/2 | gut | 0,2 | 1,0 | 1,8 | 6,2 | 6,6 |
| 3 | 99,8 | 0,2 B/3 | gut | 0,1 | 0,6 | 1,2 | 5,2 | 7,1 |
| 4 V | 99,8 | 0,2 B/V | schlecht | 0,6 | 1,8 | 2,4 | 8,9 | 7,4 |
| 5 | 99,8 | 0,2 B/4 | gut | 0,4 | 0,9 | 1,7 | 6,0 | 6,8 |

Die Ergebnisse zeigen die vorteilhaften Eigenschaften der erfindungsgemäßen thermoplastischen Formmassen.

## Patentansprüche

1. Thermoplastische Formmassen, enthaltend als wesentliche Komponenten

A) 50 - 99,99 Gew.-% eines Polyoxymethylenhomo- oder Copolymerisats

B) 0,005 - 2 Gew.-%

i) Poly-$\epsilon$-caprolactam mit einem Zahlenmittel des Molekulargewichts im Bereich von 10.000 - 15.000 oder

ii) einer Mischung aus einem Poly-$\epsilon$-caprolactam und einem Polykondensationsprodukt aus 2,2-Di-(4-hydroxyphenyl)-propan und Epichlorhydrin

sowie darüber hinaus

C) 0 - 40 Gew.-% eines schlagzäh modifizierenden Polymeren und

D) 0 - 40 Gew.-% faser- oder teilchenförmige Füllstoffe oder deren Mischungen.

**2.** Thermoplastische Formmassen nach Anspruch 1, dadurch gekennzeichnet, daß als Komponente B) eine Mischung ii) enthalten ist.

**3.** Verwendung von thermoplastischen Formmassen gemäß den Ansprüchen 1 bis 2 zur Herstellung von Formkörpern.

**4.** Formkörper, hergestellt aus thermoplastischen Formmassen gemäß den Ansprüchen 1 und 2 als wesentlichen Komponenten.